# EUROPEAN PATENT APPLICATION

(11) **EP 3 831 624 A1**
(43) Date of publication of application: **09.06.2021**
(21) Application number: 19840723.1
(22) Date of filing: 25.07.2019
(51) Int. Cl.: B60G 15/06, B60G 3/28, F16F 9/54

(54) **SUSPENSION STRUCTURE FOR IN-WHEEL MOTOR DRIVE DEVICE**

(30) Priority: 27.07.2018 JP 2018140910
(71) Applicant: NTN Corporation, Osaka-shi, Osaka 550-0003 (JP)
(72) Inventor: SUGIURA, Saori, Iwata-shi, Shizuoka 438-8510 (JP); TAMURA, Shiro, Iwata-shi, Shizuoka 438-8510 (JP)
(74) Representative: Bockhorni & Brüntjen Partnerschaft Patentanwälte mbB
(86) International application number: PCT/JP2019/029269
(87) International publication number: WO 2020/022450

(57) **Abstract**

A suspension structure for an in-wheel motor drive device includes a suspension member (41) that extends in the vertical direction and has a lower end portion connected to the in-wheel motor drive device (10), an elastic member (52) that is connected to an upper end portion (45) of the suspension member (41) and supports a vehicle body-side member (101), and attenuating means (55m, 55n, 57) that is interposed between the upper end portion (45) of the suspension member (41) and the vehicle body-side member (101) to attenuate relative displacement in the vehicle width direction or the vehicle front-rear direction between the upper end portion (45) and the vehicle body-side member (101).

## Description

### Technical field

The present invention relates to a suspension device that attaches an in-wheel motor drive device to a vehicle body-side member.

### Background Art

A suspension device that attaches a wheel-side member to a vehicle body-side member allows the wheel-side member to bounce and rebound in the vertical direction. Therefore, the wheel-side member is also called an unsprung part. In addition, the suspension device has a resonance mode that oscillates in a specific direction, such as the vehicle width direction or the vehicle front-rear direction.

When the suspension device resonates in the specific direction with the unsprung part as an excitation point, the resonance is transmitted to the vehicle body-side member, and ride comfort of the vehicle body deteriorates. Therefore, it is preferable to reduce vibration of the unsprung part.

As a strut-type suspension device for reducing vibration transmitted from a wheel to a vehicle body-side member via a lower arm of the suspension device, the suspension device described in Japanese Unexamined Patent Publication No. 2002-181121 (Patent Literature 1) is known. In the strut-type suspension device according to Patent Literature 1, a vibration isolator is interposed at a connecting portion between the lower arm and the vehicle body-side member. According to Patent Literature 1, vibration input from an unsprung part of the suspension device to the vehicle body, particularly road noise generated between a wheel and the road surface, is attenuated by the vibration isolator.

### Citation List

### Patent literature

Patent Literature 1: Japanese Unexamined Patent Publication No. 2002-181121, Fig. 12

### Summary of Invention

### Technical Problem

The road noise that is attenuated by the structure of Patent Literature 1 is caused by the lower part of the wheel being excited by the road surface in the vehicle width direction. A spot in the lower part of the wheel that touches the road surface, that is, the excitation point, is closer to the lower arm than to the strut. Therefore, in order to reduce transmission of road noise to the vehicle body, it is effective to provide the vibration isolator on the lower arm rather than on the strut as in Patent Literature 1.

Incidentally, the present inventor has found that in the case of an in-wheel motor in which a motor is arranged inside a wheel and the wheel is driven by the motor, vibration different from that in Patent Literature 1 is transmitted from the wheel to a vehicle body-side member via a suspension device.

That is, it is necessary to take measures so that apart from the road noise, vibration of the in-wheel motor itself is difficult to be transmitted to the vehicle body. Typical vibration of the in-wheel motor itself is vibration due to meshing of gears.

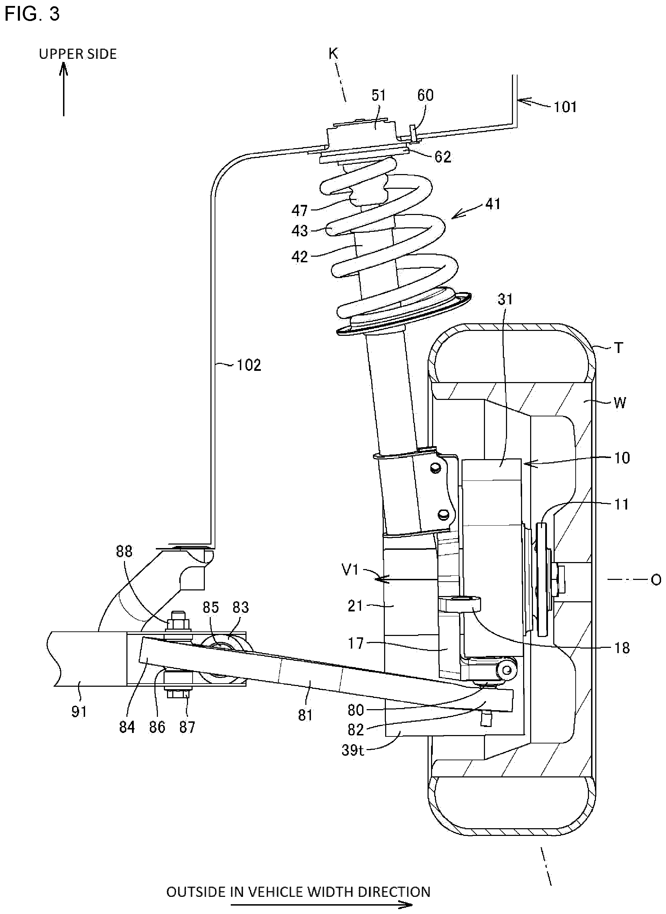

Fig. 3 is an overall view illustrating an embodiment in which an in-wheel motor drive device is connected to an unsprung part of a suspension device. With reference to Fig. 3, the suspension device has a strut 41 arranged on the upper side and a lower arm 81 arranged on the lower side. Exciting force V1 (force indicated by left arrow and force in the rightward direction, not illustrated) in the vehicle width direction generated by an in-wheel motor drive device 10 is closer to a lower end portion (also called a strut mount) of the strut 41 than to the lower arm 81. Therefore, in the embodiment illustrated in Fig. 3, vibration from the in-wheel motor drive device 10 toward a vehicle body 101 via the strut 41 becomes great. Therefore, the structure of Patent Literature 1, which is a vibration transmission countermeasure via the lower arm, cannot sufficiently reduce vibration transmitted from the in-wheel motor to the vehicle body-side member.

In view of the above circumstances, an object of the present invention is to provide a suspension structure for reducing vibration of an in-wheel motor itself transmitted to a vehicle body.

### Solution to Problem

For this purpose, a suspension structure for an in-wheel motor drive device according to the present invention includes a suspension member that extends in the vertical direction and has a lower end portion connected to the in-wheel motor drive device, an elastic member that is connected to an upper end portion of the suspension member and supports a vehicle body-side member, and attenuating means that is interposed between the upper end portion of the suspension member and the vehicle body-side member to attenuate relative displacement in the vehicle width direction or the vehicle front-rear direction between the upper end portion of the suspension member and the vehicle body-side member.

According to the present invention, the attenuating means attenuates vibration in the vehicle width direction or the vehicle front-rear direction transmitted from the in-wheel motor drive device to the vehicle body-side member via the suspension member. Furthermore, it is possible to prevent a resonance mode in which the upper end portion of the suspension member vibrates in the vehicle width direction or the vehicle front-rear direction.

The present invention is applicable to various types of suspension devices. As one aspect of the present invention, the suspension member is a shock absorber that can expand and contract in the vertical direction. The suspension structure for the in-wheel motor drive device further includes a suspension arm that extends in the vehicle width direction, has an outer end in the vehicle width direction connected to the in-wheel motor drive device, has an inner end in the vehicle width direction connected to the vehicle body-side member, and is swingable in the vertical direction. According to such an aspect, in the strut-type suspension device including the shock absorber as a strut and the suspension arm as a lower arm, vibration in the vehicle width direction or the vehicle front-rear direction transmitted from the in-wheel motor drive device to the vehicle body-side member via the strut is attenuated. In another aspect, the suspension member may be a single coil spring or a single damper.

The attenuating means is not particularly limited as long as the attenuating means is a mechanical element. As one aspect of the present invention, the attenuating means is a damper that extends in the vehicle width direction or the vehicle front-rear direction and can expand and contract in the extending direction of the damper. According to such an aspect, the damper can be set separately from the elastic member and therefore relative displacement between the suspension member and the vehicle body-side member can be attenuated. Examples of such a damper include a nested damper having a cylinder, a piston, and a piston rod. As another aspect, attenuating means other than the nested damper may be used.

As another aspect of the present invention, the elastic member and the attenuating means constitute a liquid-sealed bush. According to such an aspect, the elastic member and the attenuating means can be compactly integrated.

The in-wheel motor drive device of the present invention drives front wheels or rear wheels of an electric vehicle. In other words, the in-wheel motor drive device may be arranged inside a steered wheel or may be arranged inside a non-steered wheel. The suspension structure for the in-wheel motor drive device, which is one aspect of the present invention, further includes a rolling bearing that is provided between the liquid-sealed bush and the vehicle body-side member, the in-wheel motor drive device is arranged inside the steered wheel and can be steered together with the steered wheel, and the liquid-sealed bush and the suspension member rotate according to steering of the in-wheel motor drive device. According to such an aspect, even if the direction of the exciting force changes according to the steering angle of the in-wheel motor drive device, the exciting force can be effectively attenuated. As another aspect, the liquid-sealed bush may be attached and fixed to the vehicle body-side member.

### Advantageous Effects of Invention

As described above, according to the suspension structure of the present invention, it is possible to reduce vibration of the in-wheel motor itself transmitted to the vehicle body.

### Brief Description of Drawings

[Fig. 1] Fig. 1 is a developed sectional view illustrating an in-wheel motor drive device connected to a suspension structure of the present invention.
[Fig. 2] Fig. 2 is a schematic sectional view illustrating the inside of the in-wheel motor drive device.
[Fig. 3] Fig. 3 is an overall view illustrating a suspension structure according to a first embodiment of the present invention.
[Fig. 4] Fig. 4 is a plan view illustrating orientation of a wheel in a straight-traveling state of an electric vehicle.
[Fig. 5] Fig. 5 is a cross sectional view illustrating a liquid-sealed bush of the first embodiment.
[Fig. 6] Fig. 6 is a vertical sectional view illustrating the liquid-sealed bush of the first embodiment.
[Fig. 7] Fig. 7 is an explanatory view illustrating an example of a resonance mode of a strut.
[Fig. 8] Fig. 8 is an explanatory view illustrating another example of the resonance mode of the strut.
[Fig. 9] Fig. 9 is an overall view illustrating a suspension structure according to a second embodiment of the present invention.
[Fig. 10] Fig. 10 is a vertical sectional view illustrating a damper and an elastic bush of the second embodiment.
[Fig. 11] Fig. 11 is a vertical sectional view illustrating a damper and an elastic bush of a suspension structure according to a third embodiment of the present invention.
[Fig. 12] Fig. 12 is a cross sectional view illustrating a liquid-sealed bush of the third embodiment.
[Fig. 13] Fig. 13 is a plan view illustrating orientation of a wheel in a turning traveling state of the electric vehicle.
[Fig. 14] Fig. 14 is a cross sectional view illustrating a rotation position of the liquid-sealed bush corresponding to Fig. 13.

### Description of Embodiments

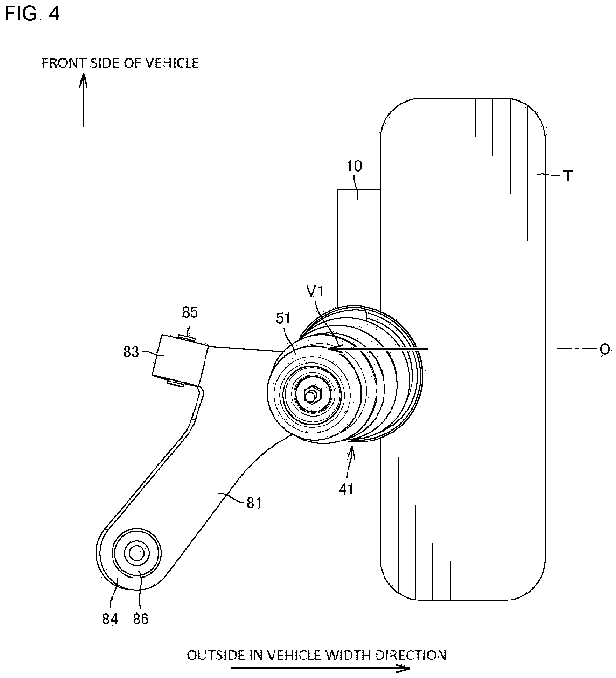

Hereinafter, embodiments of the present invention will be described in detail with reference to the drawings. Fig. 3 is an overall view illustrating a first embodiment of the present invention, and illustrates a state viewed in the vehicle front-rear direction. Fig. 4 is a plan view illustrating the first embodiment. Note that each of Figs. 3 and 4 illustrates the straight-traveling state of an electric vehicle, and illustrates a case where the steering angle of a wheel is 0°. With reference to Fig. 3, wheel houses 102 are formed on both sides (also referred to as right and left sides) of a vehicle body 101 in the vehicle width direction, respectively. A road wheel W, a tire T, an in-wheel motor drive device 10, a strut 41, and a lower arm 81 (also referred to as an arm member or a suspension arm) are arranged in the space of the wheel house 102. The strut 41 and the lower arm 81 are suspension members, respectively, and constitute a strut-type suspension device. The road wheel W, the tire T, and the in-wheel motor drive device 10 are connected to an unsprung part of the suspension device and can bounce and rebound. The vehicle body 101 is connected to a sprung part of the suspension device.

The road wheel W is coupled to a hub ring of the in-wheel motor drive device 10. The tire T is fitted to the outer periphery of the road wheel W. The road wheel W and the tire T constitutes a wheel.

The strut 41 is a shock absorber that extends in the vertical direction, and is a combination of a damper 42 extending in one direction and a coil spring 43 that are substantially coaxial. The damper 42 is a nested type having a cylinder, a piston, and a piston rod, and extends in the vertical direction. The damper 42 can be expanded and contracted in the extending direction. The coil spring 43 can also be expanded and contracted in the extending direction. The upper end of the strut 41 is connected to the vehicle body 101 via a liquid-sealed bush 51. The lower end of the strut 41 is connected to the in-wheel motor drive device 10. Specifically, the lower end portion of the strut 41 is attached and fixed to a carrier member 17 of the in-wheel motor drive device 10 by coupling means such as a bolt. Note that the coupling means is not particularly limited as long as the coupling means is a mechanical element.

With reference to Fig. 3, the lower arm 81 extends in the vehicle width direction and has an outer end 82 in the vehicle width direction and inner ends 83, 84 in the vehicle width direction. With reference to Fig. 3, the outer end 82 in the vehicle width direction of the lower arm 81 is connected to the in-wheel motor drive device 10 (specifically, the carrier member 17) via a ball joint 80. The inner end 84 in the vehicle width direction of the lower arm 81 is swingably connected to a subframe 91 via an elastic bush 86. The elastic bush 86 is a cylinder and extends in the vertical direction. The subframe 91 includes a pair of plates facing each other, and the elastic bush 86 is installed between the plates. A bolt 87 is passed through a center hole of the elastic bush 86. The shaft portion of the bolt 87 penetrates the pair of plates of the subframe 91 and is screwed with a nut 88. The head portion of the bolt 87 is locked to the outside of one of the plates of the subframe 91. The nut 88 is locked to the outside of the other of the plates of the subframe 91. As a result, the elastic bush 86 is attached and fixed to the subframe 91, and the inner end 84 in the vehicle width direction of the lower arm 81 is connected to the subframe 91.

The other inner end 83 in the vehicle width direction illustrated in Fig. 4 is also swingably connected to the subframe 91 via the elastic bush 85. The elastic bush 85 is a cylinder extending in the vehicle front-rear direction. The elastic bush 85 and the subframe 91 are also coupled by coupling means such as a bolt and a nut. As a result, the lower arm 81 can swing in the vertical direction with the inner ends 83, 84 in the vehicle width direction as base ends and the outer end 82 in the vehicle width direction as a free end.

As illustrated in Fig. 3, the strut 41 is arranged on the upper side of the in-wheel motor drive device 10. The lower arm 81 is arranged on the lower side of the in-wheel motor drive device 10. The subframe 91 is attached to the lower part of the vehicle body 101. The vehicle body 101 and the subframe 91 are also referred to as vehicle body-side members because the vehicle body 101 and the subframe 91 are attached to the vehicle-body side when viewed from the in-wheel motor drive device 10, the strut 41, and the lower arm 81.

The in-wheel motor drive device 10 is provided with an arm portion 18 extending in the vehicle front-rear direction. The base of the arm portion 18 is connected to the carrier member 17 to be described later. A front end of the arm portion 18 is connected to a tie rod of a steering device, not illustrated. The tie rod pushes and pulls the front end of the arm portion 18 in the vehicle width direction. As a result, the in-wheel motor drive device 10 is steered together with the road wheel W and the tire T. A steering axis K of the in-wheel motor drive device 10 is a straight line connecting the upper end of the strut 41 and the ball joint 80.

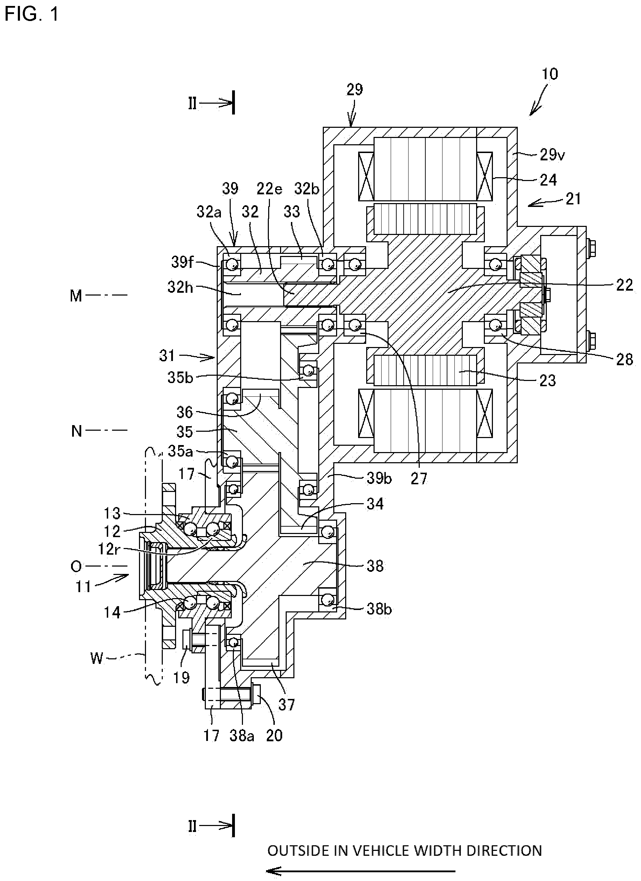

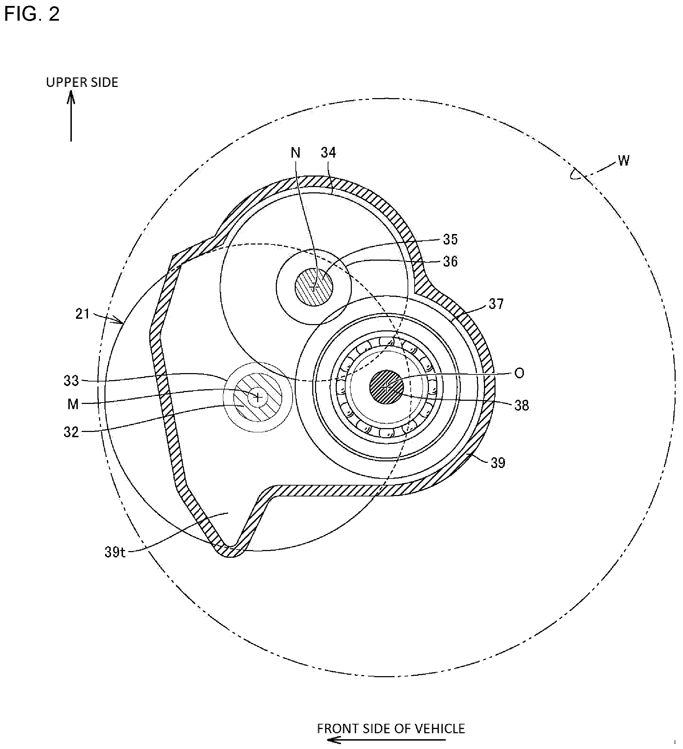

Fig. 1 is a developed sectional view illustrating the in-wheel motor drive device connected to a suspension structure of the present invention. Fig. 2 is a schematic sectional view illustrating the inside of the in-wheel motor drive device, and illustrates a section orthogonal to the axis of the wheel. As illustrated in Fig. 1, the in-wheel motor drive device 10 has a wheel hub bearing portion 11 provided in the center of a wheel, a motor unit 21 that drives the wheel, and a speed reducing unit 31 that decelerates rotation of the motor unit 21 and transmits the decelerated rotation to the wheel hub bearing portion 11. The motor unit 21 and the speed reducing unit 31 are arranged offset from the axis O of the wheel hub bearing portion 11. The axis O extends in the vehicle width direction and coincides with an axle. Regarding the position in the axis O direction, the wheel hub bearing portion 11 is arranged on one side (outboard side) of the axial direction of the in-wheel motor drive device 10, and the motor unit 21 is arranged on the other side (inboard side) of the axial direction of the in-wheel motor drive device 10. The speed reducing unit 31 is arranged on the one side in the axial direction with respect to the motor unit 21, and the position of the speed reducing unit 31 in the axial direction overlaps with the position of the wheel hub bearing portion 11 in the axial direction.

As illustrated in Fig. 3, the in-wheel motor drive device 10 is arranged in an inner space region of the road wheel W. The wheel hub bearing portion 11 and the speed reducing unit 31 are housed in the inner space region of the road wheel W. The motor unit 21 projects from the inner space region of the road wheel W to the other side (inboard side) in the axial direction; however, the motor unit 21 may be housed in the inner space region of the road wheel W as a modification, not illustrated.

The wheel hub bearing portion 11 is a rotating inner ring/fixed outer ring, and includes an inner ring 12 as a rotating ring (hub ring) coupled to the road wheel W, an outer ring 13 as a fixed ring coaxially arranged on the outer diameter side of the inner ring 12, and a plurality of rolling elements 14 arranged in an annular space between the inner ring 12 and the outer ring 13.

The carrier member 17 is attached and fixed to the outer ring 13 by coupling means such as a bolt 19. In addition, the carrier member 17 is attached and fixed to a front part 39f of a main body casing 39 of the speed reducing unit 31 by coupling means such as a bolt 20. The front part 39f is a casing wall portion of the main body casing 39 that covers one end of the speed reducing unit 31 in the axis O direction.

The motor unit 21 has a motor rotating shaft 22, a rotor 23, a stator 24, and a motor casing 29, and is sequentially arranged toward the outer diameter side from the axis M of the motor unit 21 in this order. The motor unit 21 is a radial gap motor with an inner rotor and an outer stator; however, may be another type of electric motor. For example, although not illustrated, the motor unit 21 may be an axial gap motor. The motor casing 29 surrounds the outer periphery of the stator 24. One end of the motor casing 29 in the axis M direction is coupled to a back part 39b of the main body casing 39 of the speed reducing unit 31. The other end of the motor casing 29 in the axis M direction is sealed with a motor casing cover 29v having a plate shape. The back part 39b of the main body casing 39 is a casing wall portion that covers the other end of the speed reducing unit 31 in the axis O direction.

The main body casing 39, the motor casing 29, and the motor casing cover 29v constitute a casing that forms the outer shell of the in-wheel motor drive device 10, and are also simply referred to as a casing.

Both end portions of the motor rotating shaft 22 are rotatably supported by the back part 39b of the main body casing 39 and the motor casing cover 29v of the motor unit 21 via rolling bearings 27 28, respectively.

The axis M, which is the center of rotation of the motor rotating shaft 22 and the rotor 23, extends in parallel to the axis O of the wheel hub bearing portion 11. That is, the motor unit 21 is offset so as to be separated from the axis O of the wheel hub bearing portion 11. For example, as illustrated in Fig. 2, the axis M of the motor unit 21 is offset from the axis O in the vehicle front-rear direction, and is specifically arranged on the front side of the vehicle with respect to the axis O.

The speed reducing unit 31 includes an input shaft 32 coaxially coupled to the motor rotating shaft 22 of the motor unit 21, an input gear 33 coaxially provided on the outer peripheral surface of the input shaft 32, a plurality of intermediate gears 34, 36, an intermediate shaft 35 connected to the centers of the intermediate gears 34, 36, an output shaft 38 connected to the inner ring 12 of the wheel hub bearing portion 11, an output gear 37 coaxially provided on the outer peripheral surface of the output shaft 38, and the main body casing 39 that houses the plurality of gears and rotating shafts. Since the main body casing 39 forms the outer shell of the speed reducing unit 31, the main body casing 39 is also called a speed reducing unit casing.

The input gear 33 is a helical gear with external teeth. The input shaft 32 has a hollow structure, and one end portion 22e of the motor rotating shaft 22 in the axial direction is inserted into a hollow hole 32h of the input shaft 32 to allow spline fitting (including serration, the same applies hereinafter) so that the input shaft 32 and the motor rotating shaft 22 cannot rotate relative to each other. The input shaft 32 is rotatably supported on both end sides of the input gear 33 by the front part 39f and the back part 39b of the main body casing 39 via rolling bearings 32a, 32b, respectively.

The axis N, which is the rotation center of the intermediate shaft 35 of the speed reducing unit 31, extends in parallel to the axis O. Both ends of the intermediate shaft 35 are rotatably supported by the front part 39f and the back part 39b of the main body casing 39 via rolling bearings 35a, 35b, respectively. The first intermediate gear 34 is coaxially provided on the other end portion of the intermediate shaft 35 in the axis N direction. The second intermediate gear 36 is coaxially provided on the central region of the intermediate shaft 35 in the N axis direction.

The first intermediate gear 34 and the second intermediate gear 36 are helical gears having external teeth, and the diameter of the first intermediate gear 34 is larger than the diameter of the second intermediate gear 36. The first intermediate gear 34 having a large diameter is arranged on the other side in the axis N direction with respect to the second intermediate gear 36 and meshes with the input gear 33 having a small diameter. The second intermediate gear 36 having a small diameter is arranged on one side in the axis N direction with respect to the first intermediate gear 34 and meshes with the output gear 37 having a large diameter.

As illustrated in Fig. 2, the axis N of the intermediate shaft 35 is arranged above the axis O and the axis M. In addition, the axis N of the intermediate shaft 35 is arranged on the front side of the vehicle with respect to the axis O and the rear side of the vehicle with respect to the axis M. The speed reducing unit 31 is a three-axis gear reducer with parallel axes having the axes O, N, M arranged at intervals in the vehicle front-rear direction and extending in parallel with one another, and performs deceleration in two stages. As a modification, not illustrated, the speed reducing unit 31 may be a multi-stage gear reducer with parallel axes having a plurality of intermediate shafts.

Returning to Fig. 1, the output gear 37 is a helical gear with external teeth, and is coaxially provided on the center part of the axis O of the output shaft 38. The output shaft 38 extends along the axis O. One end portion of the output shaft 38 in the axis O direction is inserted into and fitted to the center hole of the inner ring 12 so that the output shaft 38 and the inner ring 12 cannot rotate relative to each other. The center part of the output shaft 38 in the axis O direction is rotatably supported by the front part 39f of the main body casing 39 via a rolling bearing 38a on the outer diameter side with respect to the other end portion of the inner ring 12 in the axis O direction. The other end portion of the output shaft 38 in the axis O direction is rotatably supported by the back part 39b of the main body casing 39 via a rolling bearing 38b.

As illustrated in Fig. 1, the speed reducing unit 31 decelerates rotation of the input shaft 32 and transmits the decelerated rotation to the output shaft 38 by using meshing between a small-diameter drive gear and a large-diameter driven gear, that is, meshing between the input gear 33 and the first intermediate gear 34, and meshing between the second intermediate gear 36 and the output gear 37. The rotating elements from the input shaft 32 to the output shaft 38 of the speed reducing unit 31 constitute a drive transmission path that transmits rotation of the motor unit 21 to the inner ring 12 of the wheel hub bearing portion 11.

The main body casing 39 includes a tubular part in addition to the front part 39f and the back part 39b described above. The tubular part covers the internal components of the speed reducing unit 31 so as to surround the axes O, N, M extending in parallel to one another. The plate-shaped front part 39f covers the internal components of the speed reducing unit 31 from one side in the axial direction and is connected to one end of the tubular part. The back part 39b having a plate shape covers the internal components of the speed reducing unit 31 from the other side in the axial direction and is coupled to the other end of the tubular part. The back part 39b of the main body casing 39 is also a partition wall that is coupled to the motor casing 29 and separates the internal space of the speed reducing unit 31 and the internal space of the motor unit 21 from each other. The motor casing 29 is supported by the main body casing 39 and projects from the main body casing 39 to the other side in the axial direction.

The main body casing 39 defines the internal space of the speed reducing unit 31, and houses all the rotating elements (rotating shafts and gears) of the speed reducing unit 31 in the internal space. As illustrated in Fig. 2, the lower part of the main body casing 39 is an oil storage portion 39t. The height position of the oil storage portion 39t overlaps with the height position of the lower part of the motor unit 21. Lubricating oil that lubricates the motor unit 21 and the speed reducing unit 31 is stored in the oil storage portion 39t which occupies the lower part of the internal space of the main body casing 39.

The input shaft 32, the intermediate shaft 35, and the output shaft 38 are supported at both ends thereof by the rolling bearings described above. These rolling bearings 32a, 35a, 38a, 32b, 35b, 38b are radial bearings.

When electric power is supplied to the motor unit 21 from the outside of the in-wheel motor drive device 10, the rotor 23 of the motor unit 21 rotates, and rotation is output from the motor rotating shaft 22 to the speed reducing unit 31. The speed reducing unit 31 decelerates rotation input from the motor unit 21 to the input shaft 32, and outputs the decelerated rotation from the output shaft 38 to the wheel hub bearing portion 11. The inner ring 12 of the wheel hub bearing portion 11 rotates at the same rotation speed as that of the output shaft 38, and drives the road wheel W attached and fixed to the inner ring 12.

In the speed reducing unit 31, vibration is generated by meshing of the gears described above as a vibration source. In particular, due to meshing of the helical gears, vibration in the directions of the axes M, N, O, that is, in the vehicle width direction, becomes remarkable.

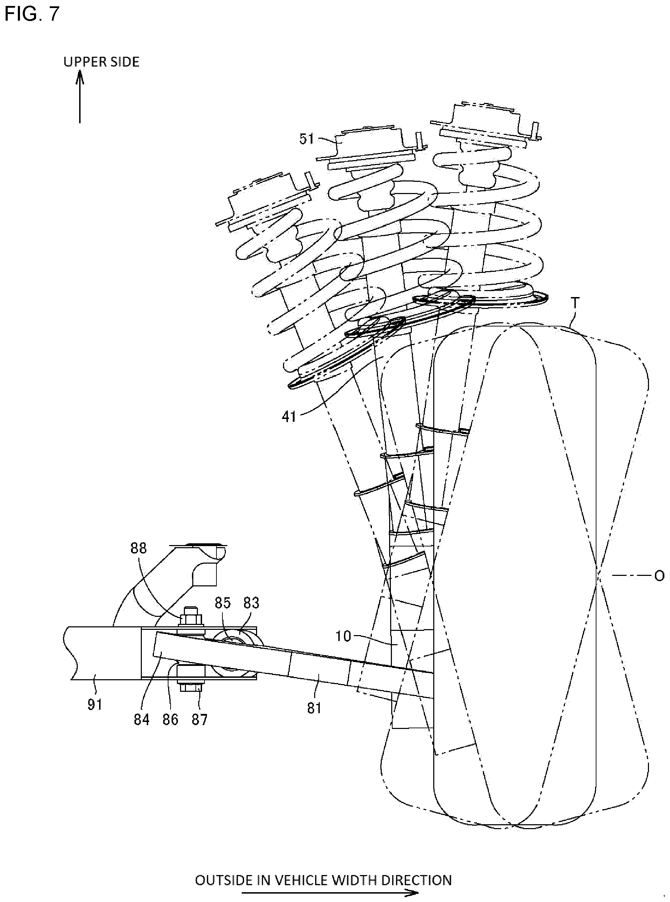

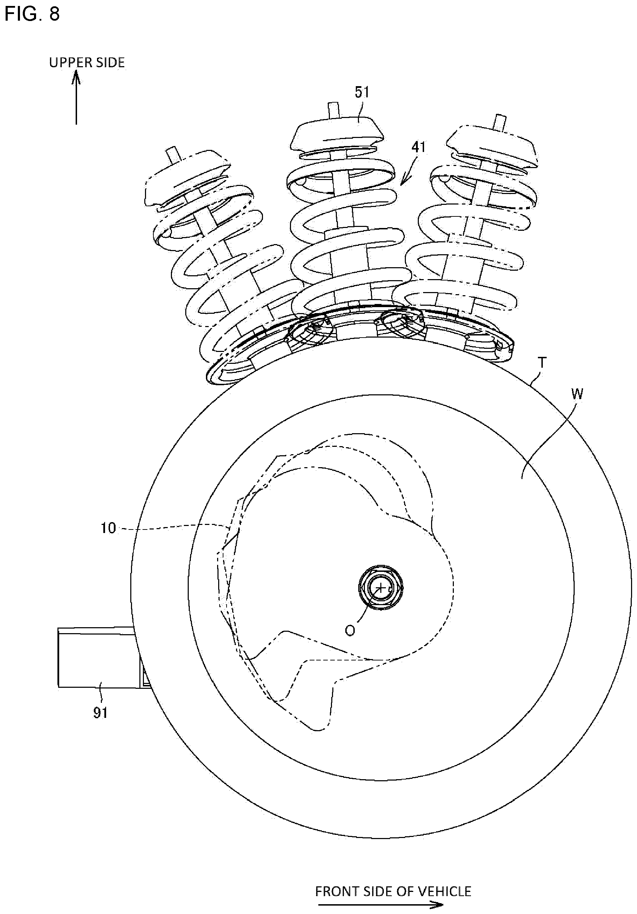

Figs. 7 and 8 are explanatory views illustrating examples of a resonance mode of the strut. In the example illustrated in Fig. 7, the strut 41 vibrates in the vehicle width direction more as proceeding toward the upper end side thereof with the wheel center of the wheel (center of the wheel on the axis O) as a fulcrum. In another example illustrated in Fig. 8, the strut 41 vibrates in the vehicle front-rear direction more as proceeding toward the upper end side thereof with the axis O as a fulcrum. Since the in-wheel motor drive device 10 of the present embodiment has the helical gears as described above, vibration in the axis O direction becomes remarkable. Therefore, attention should be paid to the resonance mode illustrated in Fig. 7.

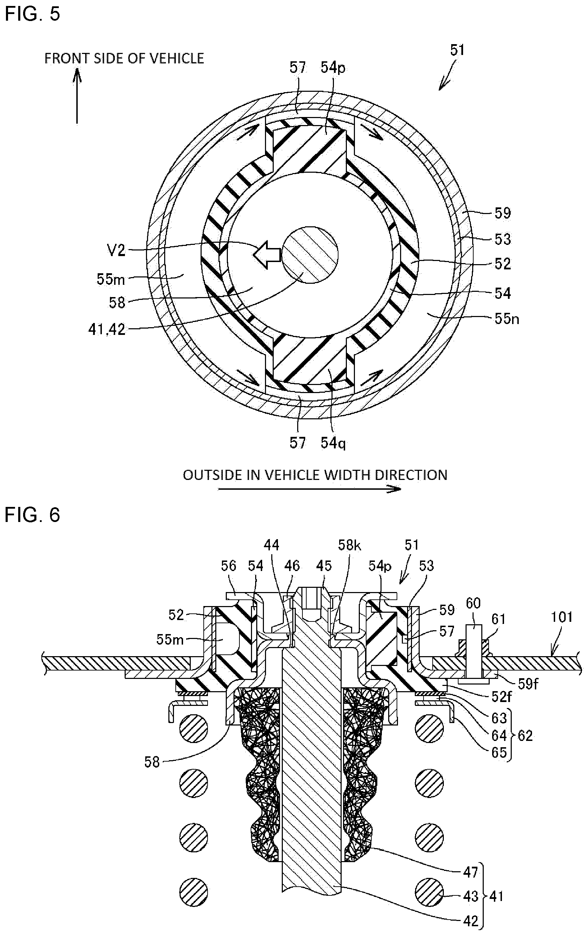

Fig. 5 is a cross sectional view illustrating a liquid-sealed bush (liquid-filled bush) that connects the upper end of the strut to the vehicle body. Fig. 6 is a vertical sectional view illustrating the upper end portion of the strut and the liquid-sealed bush. The liquid-sealed bush 51 has an elastic member 52 having an annular shape, an outer cylinder 53, an inner cylinder 54, tray members 56, 58, and a mount member 59.

The elastic member 52 having an annular shape is interposed between the outer cylinder 53 and the inner cylinder 54. The elastic member 52 is elastically deformable and allows relative displacement between the outer cylinder 53 and the inner cylinder 54.

The elastic member 52 is made of rubber having an axial thickness and a radial thickness, and large and small recessed grooves continuous in the circumferential direction are formed in the center part in the axial direction of the outer peripheral surface of the elastic member 52. The larger recessed grooves are arranged in one region in the circumferential direction and the other region in the circumferential direction, and are liquid chambers of 55m, 55n, respectively. The smaller recessed grooves are orifices 57, 57 connecting the ends of the liquid chambers 55m, 55n in the circumferential direction. The orifices 57, 57 are located 180° apart in the circumferential direction.

The outer cylinder 53 is a metal cylinder, is in close contact with the outer peripheral surface of the elastic member 52, and covers the liquid chamber 55m, the orifice 57, the liquid chamber 55n, and the orifice 57 described above. As a result, the liquid chamber 55m, the orifice 57, the liquid chamber 55n, and the orifice 57 become a continuous closed space.

The inner cylinder 54 is basically cylindrical, but protrusions 54p, 54q projecting toward the outer diameter side are formed at locations 180° apart in the circumferential direction. The inner cylinder 54 is made of resin or metal and is harder than the elastic member 52. The protrusions 54p, 54q and the outer peripheral surface of the inner cylinder 54 are in close contact with the elastic member 52. The radial thickness of the elastic member 52 is great in a circumferential position different from those of the protrusions 54p and 54q, but is reduced by the protrusions 54p, 54q in the same circumferential positions as those of the protrusions 54p, 54q. The respective orifices 57 are arranged at the same circumferential positions as those of the protrusions 54p, 54q.

Since the liquid-sealed bush 51 has the elastic member 52, the liquid-sealed bush 51 functions as an elastic bush. With reference to Fig. 5, the liquid-sealed bush 51 is made difficult to be elastically deformed in the direction across the pair of protrusions 54p, 54q, and is easily elastically deformed in the direction across the pair of liquid chambers 55m, 55n.

Since the liquid-sealed bush 51 has the liquid chambers 55m, 55n and the orifices 57, the liquid-sealed bush 51 functions as attenuating means. When exciting force V2 (left arrow) in the vehicle width direction is input from the strut 41 to the inner cylinder 54 and the inner cylinder 54 vibrates in the direction (right-left direction) across the pair of liquid chambers 55m, 55n, the volume of one of the liquid chambers increases and the volume of the other of the liquid chambers decreases, and the liquid filled in the liquid chambers 55m, 55n passes through the narrow orifices 57 as indicated by small arrows. As a result, the vibration is attenuated. Note that the exciting force V2 of the left arrow corresponds to the exciting force V1 (Fig. 3) of the left arrow.

As described above, the liquid-sealed bush 51 of the present embodiment has both the function of the elastic bush and the function of the attenuating means.

As illustrated in Fig. 5, in the present embodiment, the pair of protrusions 54p, 54q is arranged in the vehicle front-rear direction, and the pair of liquid chambers 55m, 55n is arranged in the vehicle width direction. As a result, the liquid-sealed bush 51 significantly attenuates vibration in the vehicle width direction.

As illustrated in Fig. 6, the tray members 56, 58 are fitted into the center hole of the inner cylinder 54 from one side and the other side, respectively. The bottom portions of the tray members 56, 58 are connected to each other by, for example, a crimping portion 58k. The side wall portion of each of the tray members 56, 58 has a cylindrical shape rising from the bottom portion and is fitted to the inner peripheral surface of the inner cylinder 54. Edge portions of the tray members 56, 58 extend from the top edges of the side wall portions to the outer diameter side and come into contact with one end surface and the other end surface of the elastic member 52, respectively. As a result, the elastic member 52 and the inner cylinder 54 are prevented from coming off between the tray member 56 and the tray member 58 so as not to be able to move in the axial direction.

The outer peripheral surface of the outer cylinder 53 is fitted to a mount member 59 having a cylindrical shape over the entire circumference. A flange portion 59f is formed at the lower end of the mount member 59 in the axial direction. A flange portion 52f is formed at the lower end of the elastic member 52 in the axial direction. The flange portion 52f comes into contact with the lower surface of the flange portion 59f.

An opening through which the mount member 59 is passed is formed in a plate that defines the upper portion of the wheel house 102 in the vehicle body 101. The opening penetrates the vehicle body plate from the lower surface to the upper surface of the vehicle body plate. The flange portion 59f of the mount member 59 comes into contact with the lower surface of the vehicle body plate (vehicle body 101).

A plurality of through holes is formed in the flange portion 59f at intervals in the circumferential direction, and a plurality of through holes is also formed in a portion of the vehicle body 101 that overlaps with the flange portion 59f. Bolts 60 are passed through the through holes, respectively. The shaft portion of the bolt 60 passes through the through hole of the flange portion 59f and the through hole of the vehicle body 101 and is screwed with the nut 61. As a result, the mount member 59 is attached and fixed to the vehicle body 101.

A through hole is formed in the bottom portion of each of the tray members 56, 58 through which the upper end of the strut 41 is passed. An upward annular step 44 is formed at the upper end of the strut 41, specifically, the upper end of the damper 42, and the end portion of the strut 41 is made thinner than the center part with the annular step 44 as a boundary. When the tapered upper end portion 45 described above is passed through the bottom portion through holes of the tray members 56, 58, the annular step 44 at the upper end of the strut 41 comes into contact with the bottom portion of the lower tray member 58.

A male screw is formed in the tapered upper end portion 45 of the strut 41 projecting upward from the bottom portion of the upper tray member 56, and a nut 46 is screwed to the male screw. As a result, the upper end portion of the strut 41 is connected to the liquid-sealed bush 51.

A thrust bearing 62 is provided on the lower surface of the flange portion 52f. The thrust bearing 62 has an upper bearing washer 63, rolling elements 64, and a lower bearing washer 65. The upper bearing washer 63 and the lower bearing washer 65 are annular disks. The upper bearing washer 63 is fixed to the lower surface of the flange portion 52f. The rolling elements 64 are a plurality of rollers interposed between the upper bearing washer 63 and the lower bearing washer 65. An annular edge portion projecting downward is formed on the outer peripheral edge of the lower bearing washer 65, and the lower bearing washer 65 also serves as a saucer-shaped upper coil spring seat in a downward posture. The lower bearing washer 65 is supported by the upper end of the coil spring 43.

When the in-wheel motor drive device 10 is steered, the lower end portion of the damper 42 and the coil spring 43 also rotate around the steering axis K (Fig. 3). Then, the upper bearing washer 63 and the lower bearing washer 65 of the thrust bearing 62 rotate relative to each other.

As an additional note, a damper stopper 47 is fitted and fixed to the lower tray member 58. The damper stopper 47 is a substantially cylindrical member extending along the piston rod of the damper 42, and regulates the bounce amount of the strut 41.

Incidentally, the suspension structure for the in-wheel motor drive device of the present embodiment includes the strut 41 that can expand and contract, extends in the vertical direction, and has the lower end portion connected to the in-wheel motor drive device 10, the elastic member 52 that is connected to the tapered upper end portion 45 of the strut 41 and supports the vehicle body 101, and the liquid chambers 55m, 55n and the orifices 57 as attenuating means that is interposed between the tapered upper end portion 45 of the strut 41 and the vehicle body 101 to attenuate the relative displacement in the vehicle width direction between the tapered upper end portion 45 and the vehicle body 101. The attenuating means attenuates vibration in the vehicle width direction transmitted from the in-wheel motor drive device to the vehicle body 101 via the strut 41.

Since the liquid-sealed bush 51 can attenuate vibration in the vehicle width direction illustrated in Fig. 5, the resonance mode in the vehicle width direction illustrated in Fig. 7 is suppressed. The liquid-sealed bush 51 of the present embodiment can attenuate vibration transmitted from the in-wheel motor drive device 10 to the vehicle body 101 in the strut 41 that connects the in-wheel motor drive device 10 to the vehicle body 101. According to the present embodiment, it is possible to prevent deterioration of ride comfort performance in an electric vehicle provided with the in-wheel motor drive device 10.

As a modification, not illustrated, the pair of liquid chambers 55m, 55n of the liquid-sealed bush 51 may be arranged in the vehicle front-rear direction. According to such a modification, the resonance mode in the vehicle front-rear direction illustrated in Fig. 8 can be suppressed.

In addition, as illustrated in Fig. 3, in the present embodiment, the lower arm 81 is further provided that extends in the vehicle width direction, has the outer end 82 in the vehicle width direction connected to the in-wheel motor drive device 10, has the inner end 84 in the vehicle width direction connected to the subframe 91 on the vehicle-body side, and can swing in the vertical direction. As a result, in the strut type suspension device, it is possible to suppress vibration of the in-wheel motor drive device 10 from being transmitted to the vehicle body 101 via the strut 41.

Furthermore, as illustrated in Fig. 5, in the present embodiment, the elastic member 52, the liquid chambers 55m, 55n, and the orifices 57 (attenuating means) constitute the liquid-sealed bush 51. As a result, the elastic member and the attenuating means can be compactly integrated.

Furthermore, the in-wheel motor drive device 10 of the present embodiment includes the speed reducing unit 31 as a gear reducer with parallel axes, and the speed reducing unit 31 has the gears 33, 34, 36, 37 as a plurality of helical gears. Therefore, vibration in the axis O direction is generated by meshing of the plurality of gears. In contrast, the liquid-sealed bush 51 attenuates vibration in the vehicle width direction. As a result, it is possible to prevent vibration of the in-wheel motor drive device 10 from being transmitted to the vehicle body 101 via the strut 41.

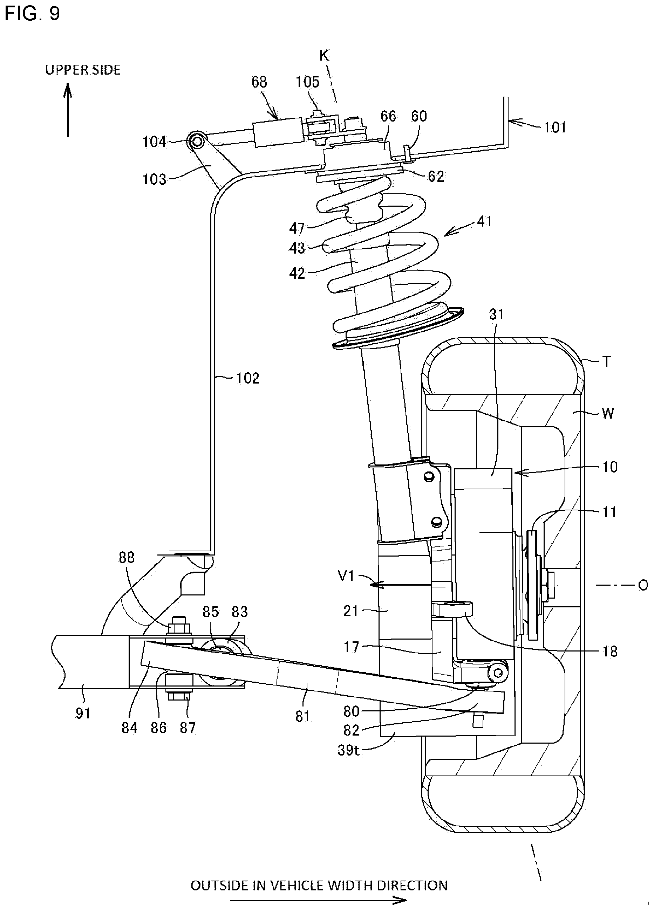

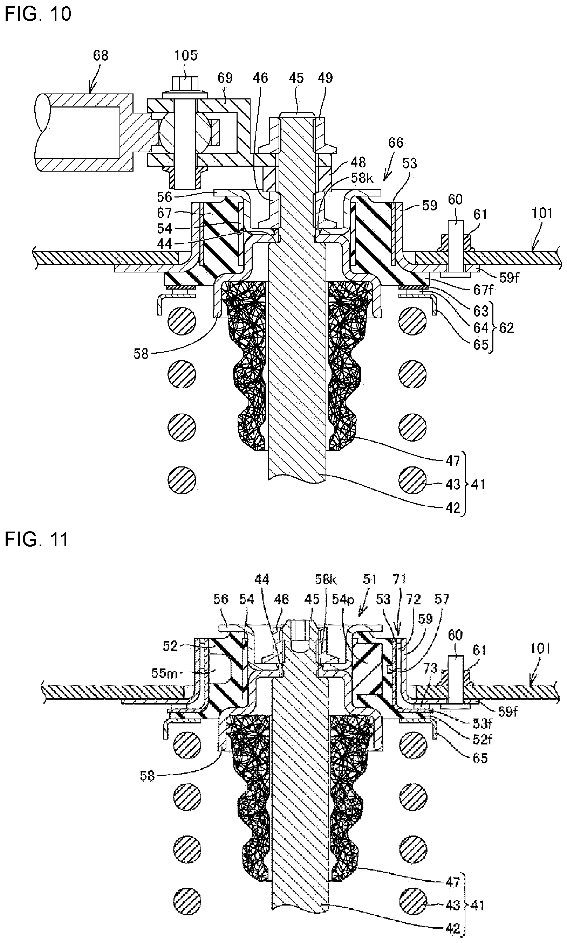

Next, a second embodiment of the present invention will be described. Fig. 9 is an overall view illustrating a suspension structure according to the second embodiment of the present invention, and illustrates a state viewed from the rear of the vehicle. Fig. 10 is an enlarged vertical sectional view of the region including an upper end portion of a strut in Fig. 9, and is a vertical sectional view of the upper end portion of the strut, a damper end portion, and an elastic bush. Regarding the second embodiment, identical reference signs will be given to the configurations common to the above-described embodiment, the description thereof will be omitted, and different configurations will be described below. In the second embodiment, an elastic bush 66 is provided as illustrated in Fig. 10 in lieu of the liquid-sealed bush described above. The elastic bush 66 has a substantially cylindrical shape and is interposed between the upper end portion of the strut 41 and a vehicle body 101.

The elastic bush 66 has an elastic member 67 interposed between an outer cylinder 53 and an inner cylinder 54, but has neither a liquid chamber nor an orifice. The elastic member 67 has a cylindrical shape made of rubber. A flange portion 67f is formed at the lower end of the elastic member 67 in the axial direction. The upper surface of the flange portion 67f comes into contact with a flange portion 59f of a mount member 59. An upper bearing washer 63 of a thrust bearing 62 is fixed to the lower surface of the flange portion 67f.

Returning to Fig. 9, a damper 68 is stretched between the vehicle body 101 and the strut 41. The damper 68 is a nested type having a cylinder, a piston, and a piston rod, and attenuates expansion and contraction movement of the damper 68 while expanding and contracting in one direction. The damper 68 of the present embodiment is provided in a posture extending in the vehicle width direction. An arm 103 is erected on the vehicle body 101 inside in the vehicle width direction with respect to the strut 41. The arm 103 projects upward. The vertical position of the arm 103 overlaps with the vertical position of the elastic bush 66. One end of the damper 68 is rotatably connected to a front end of the arm 103 via a pivot 104. The other end of the damper 68 is rotatably connected to an upper end of the strut 41 via a pivot 105.

With reference to Fig. 10, a bracket 69 is rotatably connected to the other end of the damper 68. A through hole penetrating in the vertical direction is formed in the bracket 69, and a tapered upper end portion 45 of the strut 41 is passed through the through hole. Note that the tapered upper end portion 45 is passed through a center hole of a collar 48 having a cylindrical shape, and a nut 46, the collar 48, and the bracket 69 are arranged in series.

A nut 49 is screwed into a male screw formed on the outer circumference of the tapered upper end portion 45, and thus the bracket 69 is attached and fixed between the collar 48 and the nut 49.

In the suspension structure for the in-wheel motor drive device of the second embodiment illustrated in Fig. 9, the damper 68 that extends in one direction and can expand and contract in the extending direction serves as attenuating means to attenuate relative displacement in the vehicle width direction between the vehicle body 101 and the strut 41. As a result, the resonance mode in the vehicle width direction illustrated in Fig. 7 is suppressed, and deterioration of ride comfort performance is prevented in the electric vehicle equipped with the in-wheel motor drive device 10.

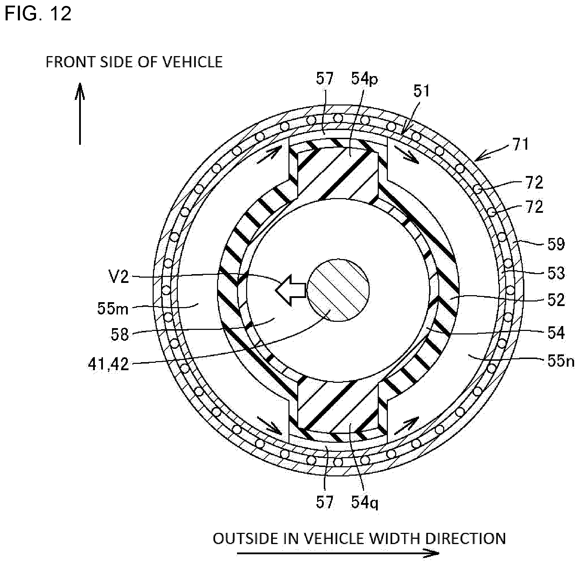

Next, a third embodiment of the present invention will be described. Fig. 11 is a vertical sectional view illustrating a strut upper end portion and a liquid-sealed bush of a suspension structure according to a third embodiment of the present invention. Fig. 12 is a cross sectional view illustrating the liquid-sealed bush of the third embodiment. The suspension device and an in-wheel motor drive device of the third embodiment are identical to those in Fig. 3. Regarding the third embodiment, identical reference signs will be given to the configurations common to the above-described embodiments, the description thereof will be omitted, and different configurations will be described below. In the third embodiment, in lieu of the thrust bearing 62 (Fig. 6) described above, a rolling bearing 71 is provided on an outer peripheral surface of a liquid-sealed bush 51, and the rolling bearing 71 rotatably supports a vehicle body 101.

The rolling bearing of the third embodiment has two rows of rolling elements 72, 73 as illustrated in Fig. 11. The rolling elements 72 in the first row are interposed between an outer peripheral surface of an outer cylinder 53 and an inner peripheral surface of a mount member 59. As illustrated in Fig. 12, the plurality of rolling elements 72 is arranged in the circumferential direction, and serves as rollers of a radial bearing with the outer peripheral surface of the outer cylinder 53 as an inner raceway surface and the inner peripheral surface of the mount member 59 as an outer raceway surface.

As illustrated in Fig. 11, a flange portion 53f is formed at a lower end of the outer cylinder 53. The rolling elements 73 in the second row are interposed between the upper surface of the flange portion 53f and the lower surface of a flange portion 59f. The plurality of rolling elements 72 is arranged in the circumferential direction, and serves as rollers of a thrust bearing with the flange portion 59f as an upper bearing washer and the flange portion 53f as a lower bearing washer.

When the in-wheel motor drive device of the third embodiment is steered together with a strut 41, the liquid-sealed bush 51 also rotates together with the strut 41. The rotation position of the liquid-sealed bush 51 in the straight traveling state and the turning state of an electric vehicle will be described below.

In the straight-traveling state of the electric vehicle with reference to Fig. 4, the liquid-sealed bush 51 is in the rotation position illustrated in Fig. 12, liquid chambers 55m, 55n are located inside and outside in the vehicle width direction, and protrusions 54p, 54q are located on the front side and the rear side of the vehicle, respectively. Therefore, the rotation position of the liquid-sealed bush 51 is similar to that of Fig. 5 of the first embodiment described above, and the liquid-sealed bush 51 effectively attenuates exciting force V1 (Fig. 3) in the straight-traveling state illustrated in Figs. 3 and 4.

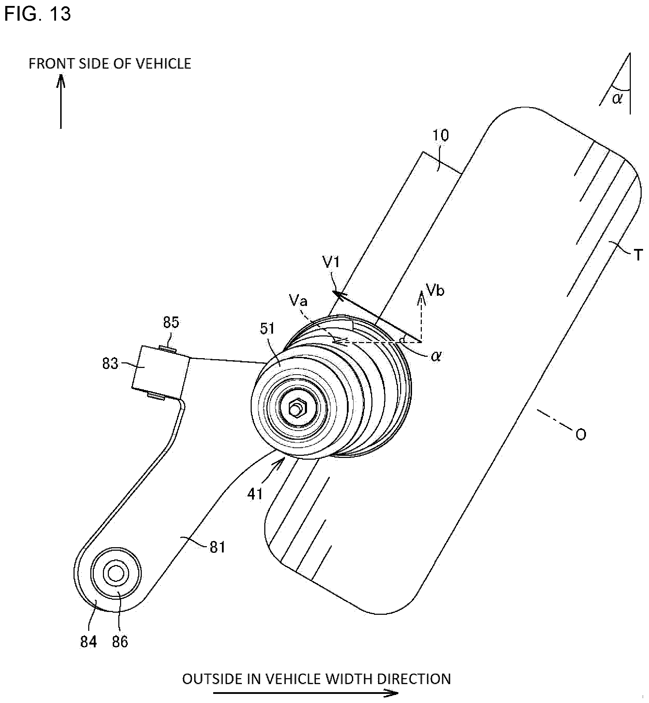

Fig. 13 is a plan view illustrating orientation of a wheel in a turning traveling state of the electric vehicle. When the in-wheel motor drive device 10 and the wheel (tire T) in an unsprung part of the suspension device are steered at a steering angle α, exciting force V1 in the axis O direction generated by the in-wheel motor drive device 10 is inclined at the angle α with respect to the vehicle width direction. In addition, the exciting force V1 is a combination of a component force Va in the vehicle width direction and a component force Vb in the vehicle front-rear direction.

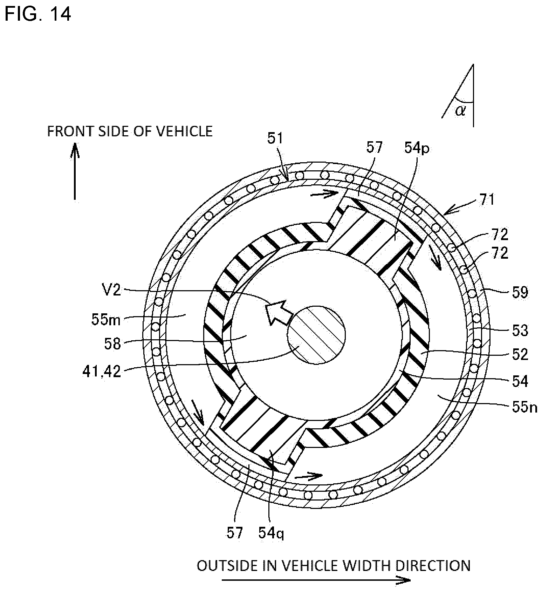

Fig. 14 is a cross sectional view illustrating a rotation position of the liquid-sealed bush of the third embodiment, corresponding to Fig. 13. As illustrated in Fig. 14, the liquid-sealed bush 51 of the third embodiment rotates according to the steering angle α of the in-wheel motor drive device, and corresponds to the direction of exciting force V2. Therefore, regardless of the magnitude of the steering angle α, the liquid-sealed bush 51 is oriented in the same direction as the axis O of the in-wheel motor drive device 10, and the exciting force V1 is efficiently attenuated.

In the electric vehicle equipped with the in-wheel motor drive device 10, an engine room does not need to be secured between a pair of right and left front wheels as in a conventional vehicle, and a wheel house 102 of each front wheel can be expanded inward in the vehicle width direction. Therefore, the maximum steering angle of the front wheels can be made greater than that of an engine vehicle. The third embodiment is useful in a suspension device for an in-wheel motor drive device in which the steering angle α is great. The third embodiment is especially useful for an electric vehicle with a maximum steering angle of more than 45°.

The suspension structure for the in-wheel motor drive device of the third embodiment further includes a rolling bearing 71 provided between the liquid-sealed bush 51 and the vehicle body 101, and the liquid-sealed bush 51 is steered together with the strut 41 and the in-wheel motor drive device 10. As a result, regardless of the steering angle α of the in-wheel motor drive device 10, vibration in the axis O direction of the in-wheel motor drive device 10 can be effectively attenuated by the liquid-sealed bush 51.

Note that as a supplementary explanation of the first embodiment for comparison, according to the first embodiment illustrated in Fig. 5, since the liquid-sealed bush 51 is attached and fixed to the vehicle body 101, the rotation position of the liquid-sealed bush 51 is unchanged irrespective of the size of the steering angle α of the wheel. Therefore, the component force Va in the vehicle width direction illustrated in Fig. 13 is attenuated; however, the component force Vb in the vehicle front-rear direction is not attenuated and is transmitted to the vehicle body 101. In particular, the greater the steering angle α, the greater the component force Vb, and vibration transmitted to the vehicle body 101 becomes remarkable.

Although the embodiments of the present invention have been described above with reference to the drawings, the present invention is not limited to the illustrated embodiments. Various modifications and changes can be made to the illustrated embodiments within the same or equivalent scope of the present invention. For example, a part of the configuration may be extracted from the above-described one embodiment, another part of the configuration may be extracted from another embodiment described above, and the extracted configurations may be combined.

### Industrial Applicability

The in-wheel motor drive device according to the present invention is advantageously used in an electric vehicle and a hybrid vehicle.

### Reference Signs List

- 10: in-wheel motor drive device
- 11: wheel hub bearing portion
- 12: inner ring
- 13: outer ring
- 14, 72, 73: rolling element
- 17: carrier member
- 21: motor unit
- 31: speed reducing unit
- 33: input gear (helical gear)
- 34: first intermediate gear (helical gear)
- 36: second intermediate gear (helical gear)
- 37: output gear (helical gear)
- 41: strut
- 42: damper
- 43: coil spring
- 47: damper stopper
- 51: liquid-sealed bush
- 52: elastic member
- 53: outer cylinder
- 54: inner cylinder
- 54p, 54q: protrusion
- 55m, 55n: liquid chamber
- 56, 58: tray member
- 57: orifice
- 59: mount member
- 62: thrust bearing
- 66: elastic bush
- 68: damper
- 81: lower arm
- 82: outer end in vehicle width direction
- 83, 84: inner end in vehicle width direction
- 91: subframe
- 101: vehicle body
- 102: wheel house
- K: steering axis
- T: tire (wheel)
- V1, V2: exciting force
- W: road wheel

## Claims

1. A suspension structure for an in-wheel motor drive device comprising:
a suspension member that extends in a vertical direction and has a lower end portion connected to the in-wheel motor drive device;
an elastic member that is connected to an upper end portion of the suspension member and supports a vehicle body-side member; and
attenuating means that is interposed between the upper end portion of the suspension member and the vehicle body-side member to attenuate relative displacement in a vehicle width direction or a vehicle front-rear direction between the upper end portion and the vehicle body-side member.

2. The suspension structure for the in-wheel motor drive device according to claim 1, wherein
the suspension member is a shock absorber that can expand and contract in the vertical direction,
the suspension structure for the in-wheel motor drive device further comprising a suspension arm that extends in the vehicle width direction, has an outer end in the vehicle width direction connected to the in-wheel motor drive device, has an inner end in the vehicle width direction connected to the vehicle body-side member, and is swingable in the vertical direction.

3. The suspension structure for the in-wheel motor drive device according to claim 1 or 2, wherein the attenuating means is a damper that extends in the vehicle width direction or the vehicle front-rear direction and can expand and contract in an extending direction of the damper.

4. The suspension structure for the in-wheel motor drive device according to claim 1 or 2, wherein the elastic member and the attenuating means constitute a liquid-sealed bush.

5. The suspension structure for the in-wheel motor drive device according to claim 4 further comprising a rolling bearing that is provided between the liquid-sealed bush and the vehicle body-side member, wherein
the in-wheel motor drive device is arranged inside a steered wheel and can be steered together with the steered wheel, and
the liquid-sealed bush and the suspension member rotate according to steering of the in-wheel motor drive device.

6. The suspension structure for the in-wheel motor drive device according to any one of claims 1 to 4, wherein the in-wheel motor drive device includes a plurality of helical gears.
